# EUROPEAN PATENT APPLICATION

(11) **EP 3 613 990 A1**
(43) Date of publication of application: **26.02.2020**
(21) Application number: 17906209.6
(22) Date of filing: 17.04.2017
(51) Int. Cl.: F04D 29/043, F01P 7/08

(54) **WATER PUMP**

(71) Applicant: TBK Co., Ltd., Machida-shi, Tokyo 194-0045 (JP)
(72) Inventor: NAKAJIMA, Mitsuo, Machida-shi Tokyo 194-0045 (JP); OHSAWA, Makoto, Machida-shi Tokyo 194-0045 (JP)
(74) Representative: Fink Numrich Patentanwälte PartmbB
(86) International application number: PCT/JP2017/015417
(87) International publication number: WO 2018/193488

(57) **Abstract**

A water pump (1) according to the present invention comprises an electromagnetic clutch (60) that switches between a transmission state where a pump pulley (20) and an armature (83) of an armature assy (80) are made to frictionally engage to transmit drive force of the pump pulley (20) to a pump shaft (30) and a cutoff state where frictional engagement of the pump pulley (20) and the armature (83) of the armature assy (80) is released to cut off transmission of drive force from the pump pulley (20) to the pump shaft (30), and a flange member (120) provided on the armature assy (80) to rotate integrally with the pump shaft (30) and is configured such that when in the cutoff state, by magnetic attractive force between a permanent magnet (111) of the pump pulley (20) and a permanent magnet (131) of the flange member (120), the flange member (120) is rotated together with the rotation of the pump pulley (20).

## Description

### TECHNICAL FIELD

The present invention relates to a water pump used in, e.g., the circulation of coolant water and so on.

### TECHNICAL BACKGROUND

Conventionally, water (coolant water) has been used as a medium for cooling a cylinder and a cylinder head in water-cooled engines including automotive engines, and there have been provided a water pump as a device for supplying the coolant water into the water jacket formed inside the cylinder block of the engine to be forcedly circulated. A conventional mechanical water pump is generally configured to comprise a pump base forming part of the cylinder block and in which an intake hole and discharge hole for coolant water are formed, a pump case attached to this pump base to form a pump chamber, and a pump pulley rotatably supported on the outer periphery of the pump case to rotate by the drive force of an engine, a pump shaft rotatably supported inside the pump case to have the drive force of the pump pulley transmitted thereto so as to rotate, and an impeller attached to an end of the pump shaft and provided inside the pump chamber. Since always discharging a corresponding flow rate of coolant water to the rotational frequency of an engine, such a water pump may supply an excessive flow rate of coolant water to the water jacket depending on the operation situation of the engine to wastefully consume motive power.

Accordingly, in these years, there is proposed an on/off water pump in which an electromagnetic clutch that connects to form or cuts off a power transmission path between the pump pulley and the pump shaft is provided so that, during cold or light load operation of an engine, etc., the power transmission path is cut off to stop the supply of coolant water and, during warm or high load operation of the engine, etc., connection is made to form the power transmission path to supply coolant water (see, e.g., Patent Document 1).

### PRIOR ARTS LIST

### PATENT DOCUMENT

Patent Document 1: Japanese Laid-Open Patent Publication No. 2014-109375

### SUMMARY OF THE INVENTION

### PROBLEMS TO BE SOLVED BY THE INVENTION

With the above on/off water pump, there is the problem that, when the power transmission path between the pump pulley and the pump shaft is cut off by the electromagnetic clutch, for example, during light load operation of the engine, etc., then the discharge flow rate of coolant water becomes zero, so that the circulation of coolant water in the water jacket is stopped, that thus local heat generation occurs in the engine, and that a failure such as seizing up or overheat of the engine is likely to occur.

In view of this problem, the present invention was made, and an object thereof is to provide a water pump which can make a certain or greater flow rate of coolant water always circulate regardless of the operation state of the electromagnetic clutch.

### MEANS TO SOLVE THE PROBLEMS

In order to solve the above problem, a water pump according to the present invention comprises a rotary member that rotates by drive force from a power source; a pump shaft that rotates around an axis line by drive force of the rotary member; an impeller provided on one end of the pump shaft; an electromagnetic clutch that has a hub member provided on the other end of the pump shaft to rotate integrally with the pump shaft and switches between a transmission state where the rotary member and the hub member are made to frictionally engage to transmit drive force of the rotary member to the pump shaft and a cutoff state where frictional engagement of the rotary member and the hub member is released to cut off transmission of drive force from the rotary member to the pump shaft; and a flange member provided on the hub member to rotate integrally with the pump shaft. The rotary member has a first magnet retention portion retaining a first permanent magnet. The flange member has a second magnet retention portion retaining a second permanent magnet. The water pump is configured such that when in the cutoff state, by magnetic attractive force between the first permanent magnet and the second permanent magnet, the flange member is rotated together with the rotation of the rotary member.

Further, the water pump according to the present invention is preferably configured such that while in the cutoff state, when drive force greater than or equal to predetermined drive force is transmitted to the flange member, magnetic coupling between the first permanent magnet and the second permanent magnet goes into a loss-of-synchronism state, so that the flange member is rotated together at a rotational frequency lower than the rotational frequency of the rotary member.

Yet further, the water pump according to the present invention is preferably configured such that a plurality of the first permanent magnets are placed around the axis line in the first magnet retention portion, that a plurality of the second permanent magnets are placed around the axis line in the second magnet retention portion, and that the first magnet retention portion and the second magnet retention portion are placed with predetermined spaces along a direction of the axis line and along a direction orthogonal to the direction of the axis line.

### ADVANTAGEOUS EFFECTS OF THE INVENTION

With the water pump according to the present invention, even when the electromagnetic clutch is in the cutoff state, by making the flange member (the pump shaft) rotate together with the rotation of the rotary member, a certain or greater flow rate of coolant water (a relatively small flow rate of coolant water) can always be discharged, and thus without wastefully consuming power, a necessary flow rate of coolant water is always circulated according to the drive state of the engine, so that the occurrence of seizing up or overheat of the engine can be prevented.

### BRIEF DESCRIPTIONS OF THE DRAWINGS

FIG. 1 is a block diagram showing the circulation path of coolant water by a water pump of the present embodiment.
FIG. 2 is a cross-sectional view of the water pump.
FIG. 3 is a view of a driving-side retention member of the water pump, seen from the other end side along an axis-line direction.
FIG. 4 is a view of a driven-side retention member of the water pump, seen from the other end side along the axis-line direction.
FIG. 5 is a graph showing the relation of a discharge flow rate and drive force (power consumption) to an input rotational frequency in the water pump.

### DESCRIPTION OF THE EMBODIMENTS

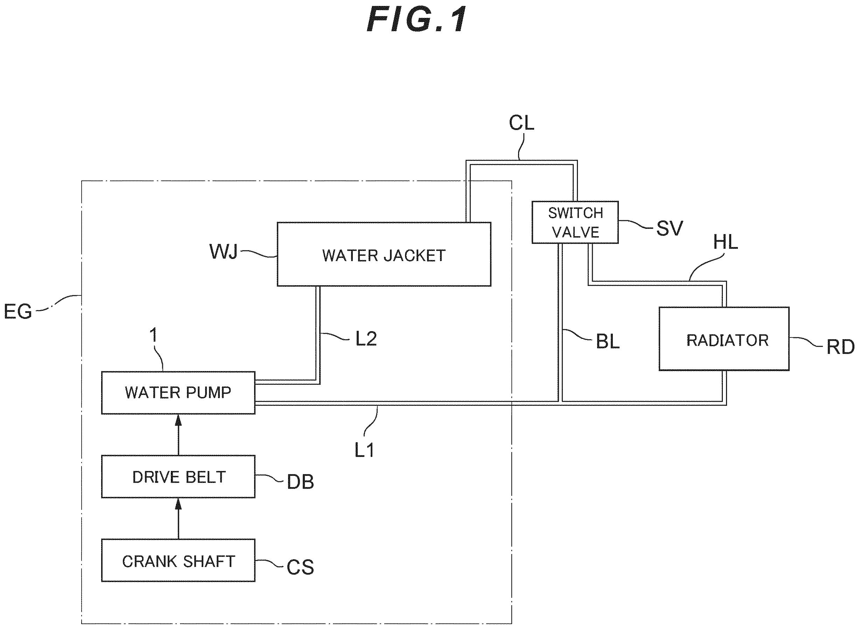

A preferable embodiment of the present invention will be described below with reference to the drawings. A water pump 1 according to one embodiment of the present invention is provided in the circulation path of coolant water and used as a device for making that coolant water be forcedly circulated. First, before describing the water pump 1 according to the present embodiment, the circulation path of coolant water by the water pump 1 will be described using FIG. 1.

As shown in FIG. 1, in the circulation path of coolant water, there are provided an engine EG that is a water-cooled internal-combustion engine, a radiator RD that cools coolant water (a cooling medium for cooling the engine) discharged from the engine EG, a switch valve SV that controls the circulation of that coolant water according to the temperature of the coolant water, and the water pump 1 that makes the coolant water be forcedly circulated, and the coolant water is circulated via a plurality of flow passages connecting these, thereby cooling the engine EG by water.

The engine EG is, for example, a water-cooled gasoline engine, and therein is provided a water jacket WJ, a space formed to cover a cylinder (not shown). Coolant water having flowed from the water pump 1 via a discharge flow passage L2 into the water jacket WJ cools the cylinder and so on while passing through that water jacket WJ and thereafter is discharged into a connection flow passage CL.

The radiator RD is configured to cool coolant water passing through the radiator RD by air blown from a cooling fan (not shown) so as to radiate heat to the outside. Thus, coolant water whose temperature has risen in the water jacket WJ of the engine EG radiates heat while passing through this radiator RD, so that the water temperature is lowered.

The switch valve SV is connected to the radiator RD via a discharge flow passage HL and connected to a bypass flow passage BL bypassing the radiator RD. The switch valve SV is constituted by a thermostat which opens or closes according to the temperature of coolant water (a coolant-water-responsive switch valve) and, when the temperature of coolant water is less than or equal to a predetermined temperature, makes the connection flow passage CL and the bypass flow passage BL communicate and, when the temperature of coolant water exceeds the predetermined temperature, makes the connection flow passage CL and the discharge flow passage HL communicate.

The water pump 1, of which the rotary shaft is coupled to a crank shaft CS of the engine EG via a drive belt DB and so on, operates in tandem with the running of the engine EG. A return flow passage L1 and the discharge flow passage L2 are connected to the water pump 1, which raises in pressure coolant water sucked from the return flow passage L1 and supplies to the water jacket WJ through the discharge flow passage L2.

In this circulation path of coolant water, coolant water discharged from the water pump 1 through the discharge flow passage L2 flows into the water jacket WJ formed inside the engine EG, cools the engine EG, and is discharged. This discharged coolant water is cooled by the radiator RD or, without passing through the radiator RD, returns to the water pump 1 through the return flow passage L1, so as to circulate.

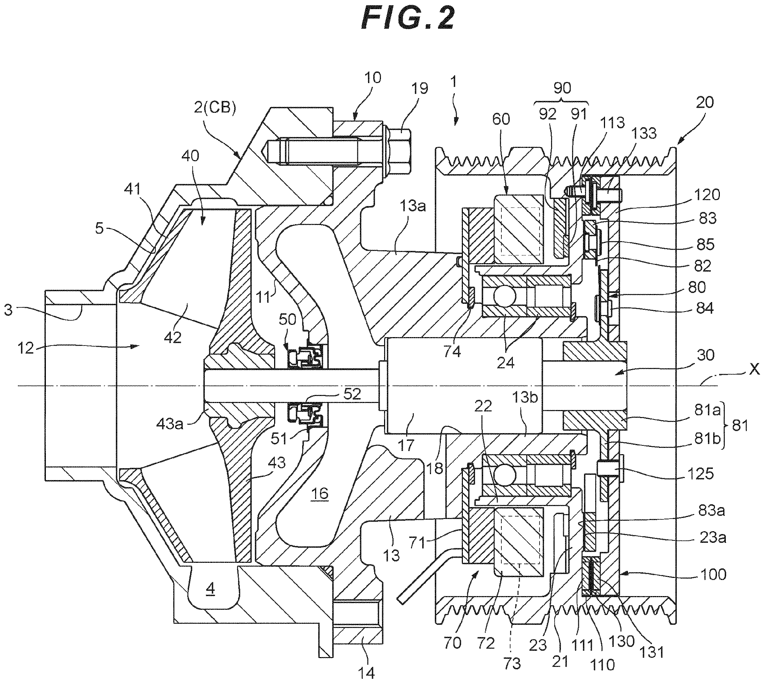

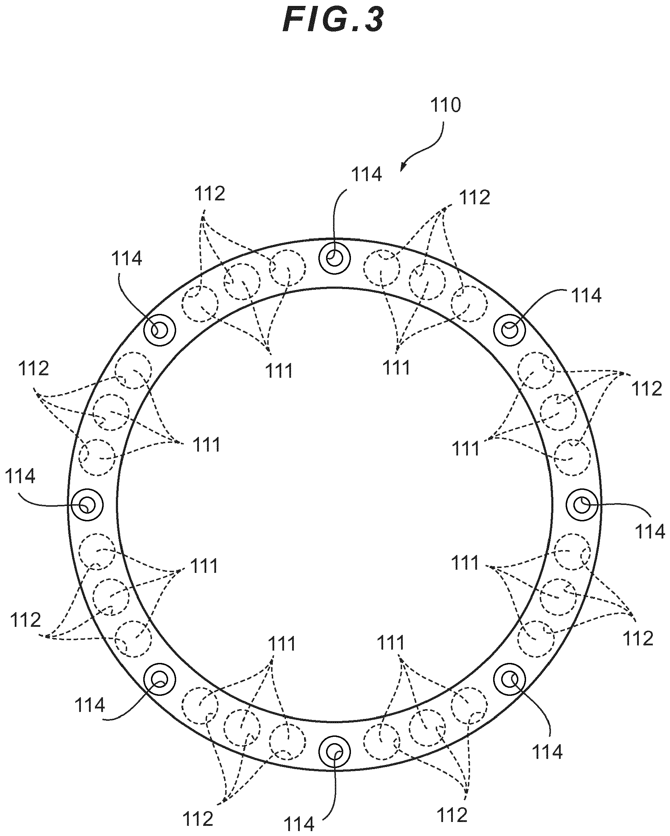

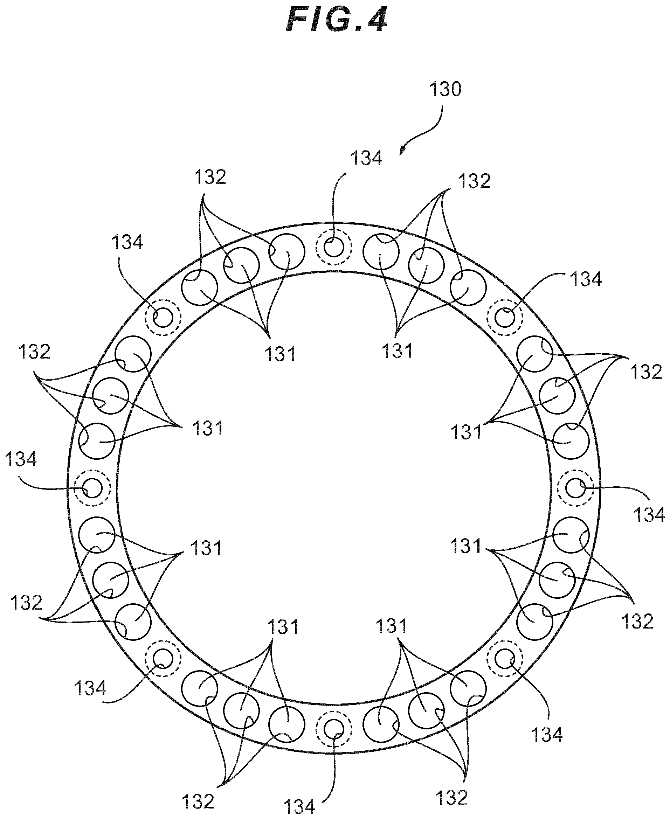

Next, the configuration of the water pump 1 according to the present embodiment will be described with reference to FIGS. 2 to 4. Hereinafter, for convenience of description, with the placement attitude of the water pump 1 shown in FIG. 2 as a reference, the left side along the axis-line direction is also called "one end side", and the right side along the axis-line direction is also called "the other end side".

The water pump 1 is constituted essentially by a pump case 10 attached to a pump base 2 forming part of a cylinder block CB of the engine EG, a pulley 20 that rotates by the drive force of the engine EG, a pump shaft 30 attached to the pump case 10 to be rotatable with the axis line X as the center, an impeller 40 attached to an end on one end side of the pump shaft 30, a mechanical seal 50 for sealing off between the pump case 10 and the pump shaft 30 in a liquid-tight manner, an electromagnetic clutch 60 that mechanically transmits or cuts off the drive force of the pump pulley 20 to the pump shaft 30, and a magnetic coupling mechanism 100 that transmits the drive force of the pump pulley 20 to the pump shaft 30 in a non-contact manner. Note that the axis line X is the rotation center common to the pump pulley 20 and the pump shaft 30.

An intake hole 3 for sucking in coolant water from the return flow passage L1 and a discharge hole 4 for discharging coolant water into the discharge flow passage L2 are provided in the pump base 2. Further, a recess 5 open toward the other end side and opposite to the pump case 10 is formed in the pump base 2. The recess 5 is continuously linked with the intake hole 3 and the discharge hole 4.

The pump case 10 is detachably attached to the pump base 2 with use of a plurality of bolts 19. A pump chamber 12 is defined between the recess 5 formed on the other end side of the pump base 2 and a recess 11 formed on one end side of the pump case 10. The pump case 10 is formed to have a hollow cylinder 13 into which the pump shaft 30 is inserted and a brim 14 extending outward radially to spread from one end side of the cylinder 13. The cylinder 13 has a larger-diameter portion 13a and a smaller-diameter portion 13b to be formed in a stepped cylinder shape as a whole. The pump pulley 20 is coaxially attached to the outer periphery of the smaller-diameter portion 13b via a bearing 24. A shaft hole 18 extending through in an axis-line direction is formed at the shaft center of the pump case 10. Further, in the pump case 10, a retention space 16 for retaining water vapor having leaked at the mechanical seal 50 is formed.

The pump pulley 20 is formed to have a pulley portion 21 over which the drive belt DB is to be stretched, a support portion 22 on whose inner periphery side the bearing 24 is fit, and a link portion 23 linking the pulley portion 21 and the support portion 22, so that the drive force (turning force) of the crank shaft CS is transmitted to the pump pulley 20 via the drive belt DB. On the other end side of the link portion 23, a flat friction surface 23a to frictionally engage with an armature 83 described later is formed.

The pump shaft 30 is rotatably supported in the pump case 10 via a bearing 17 fit in the shaft hole 18 of the pump case 10. The impeller 40 is coaxially attached to on one end side of the pump shaft 30. Between the shaft hole 18 of the pump case 10 and the pump shaft 30, the mechanical seal 50 for retaining the hermeticity of the pump chamber 12 seals off.

The mechanical seal 50 is constituted by a first seal member 51 fixed to the inner periphery surface of the shaft hole 18 of the pump case 10 and a second seal member 52 fixed to the outer periphery surface of the pump shaft 30, and both the seal members 51, 52 are in sliding contact, being opposite to each other with respect to the axis-line direction so that the hermeticity of the pump chamber 12 is retained.

The impeller 40 is configured to comprise a cover 41 formed in the shape of a truncated circular cone which becomes larger in diameter from one end side toward the other end side, a plurality of blades 42 provided on the other end side of the cover 41, and a shroud 43 into which the pump shaft 30 is pressed to be fixed. A hollow bush 43a is insert molded at the center of the shroud 43. The plurality of blades 42 are arranged radially around the shaft center and formed such that the circumferential space between adjacent blades 42 becomes gradually larger from the inner side toward the outer side along a radial direction (that is, in a direction in which coolant water is discharged). This impeller 40 rotates integrally with the pump shaft 30, thereby sucking coolant water into the pump chamber 12 through the intake hole 3 of the pump base 2 and discharging that coolant water through spaces between the blades 42 via the discharge hole 4 of the pump base 2 to the outside. Although a closed impeller is adopted as the impeller 40 in the present embodiment, an open impeller may be adopted.

The electromagnetic clutch 60 is configured to comprise a field core assy 70 attached to the pump case 10, an armature assy 80 attached to the pump shaft 30, and a magnet unit 90 attached to the pump pulley 20.

The field core assy 70 has a bracket 71 detachably attached to the end face on the other end side of the larger-diameter portion 13a with use of a snap ring 74, a core 72 fixed to the bracket 71, and an exciting coil 73 placed inside the core 72, and the exciting coil 73 is energized based on an electrical signal from control means (not shown), thereby generating a magnetic field. The exciting coil 73 is constituted by a coil line wound around the outer periphery of a bobbin and is housed in the core 72 and molded in insulating resin.

The armature assy 80 comprises a hub 81 fixed to the pump shaft 30, a plate spring 82 as an elastic member attached to the hub 81, and an armature 83 attached to the plate spring 82. The hub 81 has a boss 81a into which the other end side of the pump shaft 30 is pressed and a circular plate 81b formed integrally on the outer periphery side of the boss 81a and is attached to be rotatable integrally with the pump shaft 30 with the shaft center X as the center. The plate spring 82 is formed like a band plate by punching processing of spring steel material, and its base end side (fixed end side) is fastened to the hub 81 via a rivet 84, and its tip side (free end side) is fastened to the armature 83 via a rivet 85, so that the plate spring 82 is attached straddling between the hub 81 and the armature 83 to be elastically deformable substantially in a plate-thickness direction. The armature 83 is formed of magnetic material substantially like a disk and attached to the tip side of the plate spring 82 so as to be supported to be relatively movable in an axis-line direction with respect to the hub 81. The armature 83 is always biased by the elastic force of the plate spring 82 to be away from the pump pulley 20 (the friction surface 23a). The end face on one end side of the armature 83 is formed as a friction surface 83a that can engage frictionally with the friction surface 23a of the pump pulley 20.

The magnet unit 90 has a permanent magnet 91 that magnetically attracts the armature 83 so that the friction surface 83a of the armature 83 abuts the friction surface 23a of the pump pulley 20 for frictional engagement, and an outer polar plate 92 for fixing the permanent magnet 91 to the pump pulley 20. The permanent magnet 91 is formed like a circular ring and generates a magnetic field of the direction to attract the armature 83 in (the opposite direction to that of the magnetic field of the field core assy 70). The outer polar plate 92 is formed of magnetic material like a ring L-shaped in cross-section and fixed to the inner periphery side of the pulley portion 21 with the permanent magnet 91 being fit in.

The magnetic coupling mechanism 100 is configured to comprise a driving-side retention member 110 retaining a plurality of (24 in this embodiment) permanent magnets 111 and attached to the pump pulley 20, a flange member 120 attached to the hub 81 of the armature assy 80, and a driven-side retention member 130 retaining a plurality of (24 in this embodiment) permanent magnets 131 and attached to the flange member 120. Note that the permanent magnets 111, 131 are placed in positions where they are not affected by the magnetism of the exciting coil 73 and permanent magnet 91 in the electromagnetic clutch 60 (positions offset in diameter directions).

The driving-side retention member 110 is formed of, e.g., non-magnetic material like a circular ring with the axis line X as the center. The driving-side retention member 110 is fixed coaxially to the pump pulley 20 with use of multiple flat-head bolts 113 and configured to be rotatable integrally with the pump pulley 20. Note that these flat-head bolts 113 are inserted into bolt inserting holes 114 formed in the driving-side retention member 110. A plurality of (24) magnet retention holes 112 are formed open along a circumferential direction in the end face on one end side of the driving-side retention member 110. In this example, the magnet retention holes 112 are placed with a predetermined space (for the bolt inserting hole 114) every three of them. The permanent magnet 111, whose one magnetic pole (N pole) faces the flange member 120, is fit in the magnet retention hole 112. That is, the surface on the other end side of the permanent magnet 111 is an N pole.

The flange member 120 is formed of, e.g., non-magnetic material like a hollow disk with the axis line X as the center. The flange member 120, having the boss 81a of the hub 81 inserted fit therein, is fixed to the other end side of the hub 81 with use of a plurality of flat-head bolts 125. The outer periphery face of the flange member 120 is formed to be slightly smaller in diameter than the inner periphery face of the pulley portion 21.

The driven-side retention member 130 is formed of, e.g., non-magnetic material like a circular ring with the axis line X as the center. The driven-side retention member 130 is fixed coaxially to the flange member 120 with use of a plurality of flat-head bolts 133 and configured to be rotatable integrally with the flange member 120. Note that these flat-head bolts 133 are inserted in bolt inserting holes 134 formed in the driven-side retention member 130. The inner and outer diameters of the flange-side retention member 130 are set to be substantially the same as those of the pulley-side retention member 110, and the flange-side retention member 130 and the pulley-side retention member 110 are opposite to each other with a predetermined space along the axis-line direction. Specifically, the end face on one end side of the flange-side retention member 130 and the end face on the other end side of the pulley-side retention member 110 are in a positional relation of being opposite to each other along the axis-line direction. A plurality of (24) magnet retention holes 132 are formed open along a circumferential direction in the end face on the other end side of the flange-side retention member 130. In the present embodiment, the magnet retention holes 132 are placed with a predetermined space (for the bolt inserting hole 134) every three of them. The permanent magnet 131, whose one magnetic pole (N pole) faces the link portion 23 of the pump pulley 20, is fit in each magnet retention hole 132. That is, the surface on one end side of the permanent magnet 131 (the opposite surface to the permanent magnet 111) is an S pole. Note that the flange-side retention member 130 and the pulley-side retention member 110 may be placed with predetermined spaces along the axis-line direction and a direction orthogonal to the axis-line direction (e.g., a vertical direction or horizontal direction).

The permanent magnet 111 and the permanent magnet 131 are placed with respective different magnetic poles being opposite to each other, so that magnetic attractive force is induced through the dividing wall between the permanent magnets 111, 131 (the dividing wall between both the retention members 110, 130). Thus, the pump pulley 20 and the flange member 120 are magnetically coupled by the action of magnetic force between the permanent magnets 111, 131. The magnetic coupling force can be adjusted as needed by changing, for example, the number of the permanent magnets 111, 131, the respective magnetic force of the permanent magnets 111, 131, the distance between both the permanent magnets 111, 131 (the distance along the axis-line direction and the distance along a direction orthogonal to the axis-line direction), or the like.

Next, in order to facilitate understanding of the present embodiment, the action of the water pump 1 will be described.

First, in the water pump 1, during the operation of the engine EG, when current conduction to the exciting coil 73 is cut off, the electromagnetic clutch 60 goes into a power transmission state. In the power transmission state, since current conduction to the exciting coil 73 is cut off, the armature 83 is magnetically attracted and stuck to the pump pulley 20 by the magnetic field of the permanent magnet 91 against the bias force of the plate spring 82. At this time, the friction surface 23a of the pump pulley 20 frictionally engages with the friction surface of the armature 83, thereby transmitting the drive force of the engine EG to the pump shaft 30 via the pump pulley and the armature 83 (the hub 81), so that the impeller 40 rotates integrally with the pump shaft 30. Thus, the water pump 1 goes into a drive state, and coolant water is supplied from the water pump 1 to the inside of the engine EG (the water jacket WJ), so that the engine EG is water-cooled by the action of the coolant water. Note that in the power transmission state, the flange member 120 (the pump shaft 30) rotates synchronously with the pump pulley 20 so as to rotate at substantially the same rotational frequency as the pump pulley 20. That is, in the power transmission state, the rotational frequency (input rotational frequency) of the pump pulley 20 is substantially the same as the rotational frequency (output rotational frequency) of the pump shaft 30.

In contrast, in the water pump 1, when the engine EG goes into a predetermined drive state (for example, when the load is light or when the temperature of coolant water is lower than a predetermined temperature), the exciting coil 73 is energized, so that the electromagnetic clutch 60 goes into a power cutoff state. In the power cutoff state, the exciting coil 73 is energized, so that the field core assy 70 generates a magnetic field. Because the magnetic field of the field core assy 70 is generated in the direction opposite to that of the magnetic field of the permanent magnet 91, those magnetic fields cancel each other out. Thus, the armature 83 is released from binding by the magnetic field of the permanent magnet 91 (not affected by the magnetic field) and biased by the plate spring 82 to be away from the pump pulley 20. Hence, frictional engagement between the pump pulley 20 and the armature 83 is released. Therefore, the transmission of drive force by contact (frictional engagement) between the friction surface 23a of the pump pulley 20 and the friction surface 83a of the armature 83 is stopped.

In contrast, since the magnetic coupling mechanism 100 is incorporated in the water pump 1, when the pump pulley 20 rotates in the power cutoff state, the permanent magnets 131 provided in the flange member 120 are attracted to the permanent magnets 111 provided in the pump pulley 20, and by that magnetic force (magnetic attractive force), the flange member 120 rotates following the rotation of the pump pulley 20 together therewith. That is, the magnetic coupling mechanism 100 transmits the drive force of the pump pulley 20 to the flange member 120 and the pump shaft 30 in a non-contact manner. At this time, as the rotational frequency of the pump shaft 30 increases, the drive force (drive torque) of the pump also increases, but as to this magnetic attractive force (magnetic coupling force), adjustment is made such that, if the drive force of the pump (the drive force by which the pump shaft 30 rotates) exceeds a certain value, the magnetic coupling mechanism 100 goes into a loss-of-synchronism state in which the rotation of the flange member 120 cannot follow that of the pump pulley 20. In the present embodiment, because the above certain value is set at a relatively low value, the magnetic coupling mechanism 100 is made to go into the loss-of-synchronism state while the rotational frequency of the pump pulley 20 is in a low rotation region. As such, the magnetic coupling mechanism 100 goes into the loss-of-synchronism state, thus reducing drive force transmitted from the pump pulley 20 to the flange member 120, so that the flange member 120 (the pump shaft 30) rotates at a rotational frequency lower than the rotational frequency of the pump pulley 20. That is, the rotational frequency (output rotational frequency) of the pump shaft 30 is lower than the rotational frequency (input rotational frequency) of the pump pulley 20. Therefore, when in the power cutoff state, even with the same input rotational frequency, the rotational frequency of the flange member 120 (the pump shaft 30) can be suppressed to be lower than when in the power transmission state. As such, the magnetic coupling mechanism 100 goes into the loss-of-synchronism state, so that a rotation difference (relative rotation) between the pump pulley 20 and the flange member 120 (the pump shaft 30) occurs, and thus the output rotational frequency of the pump shaft 30 can be reduced with respect to the input rotational frequency of the pump pulley 20. As a result, even when in the power cutoff state, a relatively small amount of coolant water (a certain or greater flow rate of coolant water) can always be circulated.

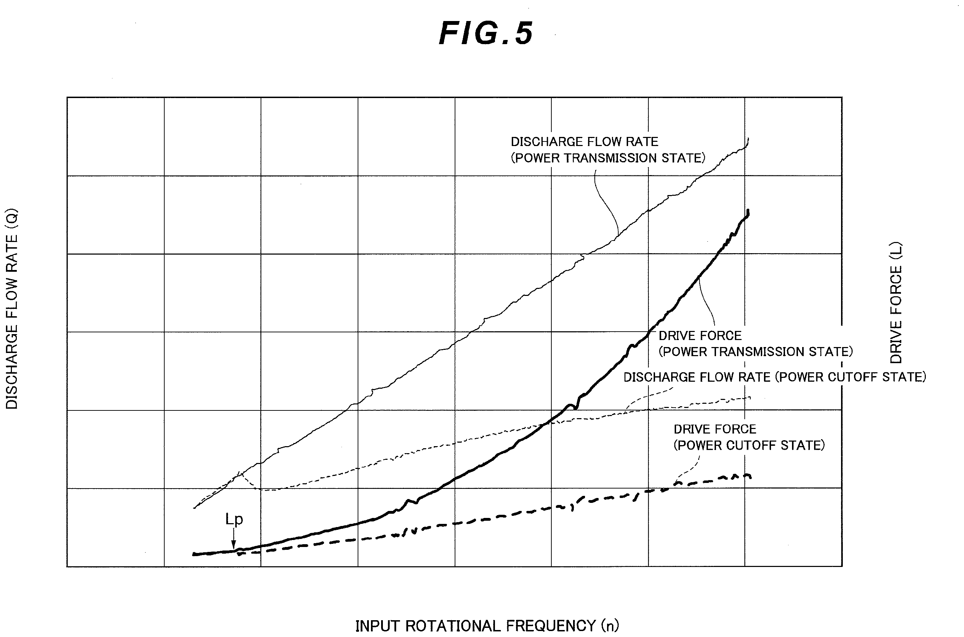

FIG. 5 is a graph showing the relation of the discharge flow rate and drive force (power consumption) to the input rotational frequency in the water pump 1 of the present embodiment. In the present embodiment, adjustment is made such that, while in the power cutoff state, when the drive force of the pump exceeds a certain value (Lp), the magnetic coupling mechanism 100 goes into the loss-of-synchronism state. Thus, in the power cutoff state, the pump pulley 20 and the flange member 120 synchronously rotate when the input rotational frequency is in a low rotation region and the drive force of the pump is less than or equal to the certain value. In contrast, when the drive force of the pump exceeds the certain value (Lp) with an increase in the input rotational frequency, the rotation of the flange member 120 cannot follow that of the pump pulley 20, so that the magnetic coupling mechanism 100 goes into the loss-of-synchronism state. Therefore, even with the same input rotational frequency, the drive force of the pump when in the power cutoff state is suppressed to be about 20% of the drive force of the pump when in the power transmission state. As such, when in the power cutoff state, the drive force of the pump (the drive force transmitted from the pump pulley 20 to the flange member 120) can be reduced. Thus, without wastefully consuming power, a certain or greater flow rate of coolant water needed by the engine EG can always be discharged. Note that, also when in the power cutoff state, the drive force of the pump changes linearly according to an increase in the input rotational frequency. The reason is that because the plurality of permanent magnets 111, 131 are placed along a circumferential direction in the retention members 110, 130, as the rotational frequency (input rotational frequency) of the pump pulley 20 increases, magnetic coupling force acting between both the permanent magnets 111, 131 becomes stronger.

As described above, with the water pump 1 according to the present embodiment, even when the electromagnetic clutch 60 is in the power cutoff state, by making the flange member 120 (the pump shaft 30) rotate together with the rotation of the pump pulley 20, a certain or greater flow rate of coolant water (a relatively small flow rate of coolant water) can always be discharged, and thus without wastefully consuming power, a necessary flow rate of coolant water is always circulated according to the drive state of the engine EG, so that the occurrence of seizing up or overheat of the engine EG can be prevented.

Further, with the water pump 1 of the present embodiment, by switching on/off the energization of the exciting coil 73 by electronic control according to the drive state of the engine, the operation state of the water pump 1 can be arbitrarily switched between usual operation (the power transmission state) and energy-saving operation (the power cutoff state), so that power consumption can be further reduced.

Note that the present invention is not limited to the above embodiment and that improvements can be made as needed without departing from the spirit of the invention.

Although the above embodiment illustrates the configuration where the plurality of (24) permanent magnets 111, 131 are placed along a circumferential direction in the retention members 110, 130, the placement, shape, number, and so on of permanent magnets 111, 131 are not limited to those illustrated in the above embodiment, but the other placement, shape, number, and so on may be applied. Further, although the above embodiment illustrates and describes the configuration where the inner and outer diameters of the pulley-side retention member 110 are set to be substantially the same in size as those of the flange-side retention member 130, not being limited to this configuration, the inner and outer diameters of the pulley-side retention member 110 may be set to be different in size from those of the flange-side retention member 130.

Although the above embodiment illustrates the configuration where, in the magnetic coupling mechanism 100, both the permanent magnets 111, 131 are placed opposite to each other with a predetermined space along the axis-line direction via wall surfaces of the retention members 110, 130, not being limited to this configuration, a configuration where both the permanent magnets 111, 131 are placed with predetermined spaces along the axis-line direction and along a direction orthogonal to the axis-line direction via wall surfaces of the retention members 110, 130 or a configuration where both the permanent magnets 111, 131 are placed with predetermined spaces along the axis-line direction and along a direction orthogonal to the axis-line direction directly, not via wall surfaces of the retention members 110, 130 may be taken on.

Although the above embodiment illustrates and describes as the electromagnetic clutch 60 a so-called normally-closed electromagnetic clutch with which the pump pulley 20 and the pump shaft 30 are in a connected state (the power transmission state) when not energized, not being limited to this configuration, a so-called normally-open electromagnetic clutch with which the pump pulley 20 and the pump shaft 30 are in a cutoff state (the power cutoff state) when not energized may be applied.

### EXPLANATION OF NUMERALS AND CHARACTERS

1 water pump
10 pump case
20 pump pulley (rotary member)
30 pump shaft
40 impeller
50 mechanical seal
60 electromagnetic clutch
70 field core assy
80 armature assy (hub member)
83 armature
90 magnet unit
100 magnetic coupling mechanism
110 driving-side retention member (first magnet retention portion)
111 permanent magnet (first permanent magnet)
120 flange member
130 driven-side retention member (second magnet retention portion)
131 permanent magnet (second permanent magnet)
EG engine (power source)
X axis line

## Claims

1. A water pump comprising:
a rotary member that rotates by drive force from a power source;
a pump shaft that rotates around an axis line by drive force of the rotary member;
an impeller provided on one end of the pump shaft;
an electromagnetic clutch that has a hub member provided on the other end of the pump shaft to rotate integrally with the pump shaft and switches between a transmission state where the rotary member and the hub member are made to frictionally engage to transmit drive force of the rotary member to the pump shaft and a cutoff state where frictional engagement of the rotary member and the hub member is released to cut off transmission of drive force from the rotary member to the pump shaft; and
a flange member provided on the hub member to rotate integrally with the pump shaft, wherein
the rotary member has a first magnet retention portion retaining a first permanent magnet,
the flange member has a second magnet retention portion retaining a second permanent magnet, and
the water pump is configured such that when in the cutoff state, by magnetic attractive force between the first permanent magnet and the second permanent magnet, the flange member is rotated together with the rotation of the rotary member.

2. The water pump according to claim 1, wherein the water pump is configured such that while in the cutoff state, when drive force greater than or equal to predetermined drive force is transmitted to the flange member, magnetic coupling between the first permanent magnet and the second permanent magnet goes into a loss-of-synchronism state, so that the flange member is rotated together at a rotational frequency lower than the rotational frequency of the rotary member.

3. The water pump according to claim 1 or 2, wherein a plurality of the first permanent magnets are placed around the axis line in the first magnet retention portion,
a plurality of the second permanent magnets are placed around the axis line in the second magnet retention portion, and
the first magnet retention portion and the second magnet retention portion are placed with predetermined spaces along a direction of the axis line and along a direction orthogonal to the direction of the axis line.
